## Europäisches Patentamt
## European Patent Office
## Office européen des brevets

(19)

(11) Veröffentlichungsnummer: **0 272 249 B1**

# EUROPÄISCHE PATENTSCHRIFT

(12)

(45) Veröffentlichungstag der Patentschrift: **07.08.91**

(51) Int. Cl.5: **A61C 9/00**

(21) Anmeldenummer: **87890292.3**

(22) Anmeldetag: **15.12.87**

(54) **Abformlöffel.**

(30) Priorität: **16.12.86 AT 3346/86**

(43) Veröffentlichungstag der Anmeldung:
**22.06.88 Patentblatt 88/25**

(45) Bekanntmachung des Hinweises auf die
Patenterteilung:
**07.08.91 Patentblatt 91/32**

(84) Benannte Vertragsstaaten:
**BE CH DE ES FR GB GR IT LI LU NL SE**

(56) Entgegenhaltungen:
**EP-A- 0 090 975**
**AT-A- 53 763**
**DE-C- 520 556**
**US-A- 1 489 192**
**US-A- 3 890 711**

(73) Patentinhaber: **Wedenig, Wolfgang**
**Bahnhofstrasse 16**
**A-9300 St. Veit(AT)**

Patentinhaber: **Resch, Wilfried**
**Bahnhofstrasse 16**
**A-9300 St. Veit(AT)**

(72) Erfinder: **Wedenig, Wolfgang**
**Bahnhofstrasse 16**
**A-9300 St. Veit(AT)**
Erfinder: **Resch, Wilfried**
**Bahnhofstrasse 16**
**A-9300 St. Veit(AT)**

(74) Vertreter: **Müllner, Erwin, Dr. et al**
**Patentanwälte Dr. Erwin Müllner Dipl.-Ing.**
**Werner Katschinka Postfach 159 Weihburg-**
**gasse 9**
**A-1010 Wien(AT)**

## Beschreibung

Die Erfindung betrifft einen Abformlöffel zur Ober- und bzw. oder Unterkieferabformung, mit schaufelförmigem, randseitig von einem hochgezogenen Steg begrenztem etwa U -förmigen Basisteil und Einschub, wobei ein Fortsatz des Einschubes zur gegenseitigen Fixierung in eine Ausnehmung eines Stiels des Basisteils eingreift.

Aus der AT-PS 53 763 ist ein Abformlöffel bekannt, der aus zwei Teilen besteht. Der mit einem durchgehenden flachen Boden ausgestattete Basisteil trägt einen Aufsatz, der der Gaumenwölbung nachgeformt ist und der mittels eines Fortsatzes beweglich in einer Ausnehmung des Basisteils gelagert ist. Ein solcher Löffel berücksichtigt die Zunge im Mund in keiner Weise und kann für die heute üblichen Abformtechniken nicht sinnvoll eingesetzt werden. Darüber hinaus ist der Löffel nach der AT-PS 53 763 ausschließlich für Oberkiefer-Gipsabdrücke geeignet. Der bekannte Löffel diente lediglich zum Einbringen der angerührten Gipsmasse in den Mund. Nach dem Aushärten mußte der Gipskörper noch im Mund vom Löffel getrennt werden. Danach mußte der Gipskörper im Mund des Patienten in mehrere Teile gebrochen werden,um überhaupt entfernt werden zu können. Außerhalb des Mundes wurden die Teile wieder zur Abdruckform zusammengeklebt und zur Modellherstellung weiterverwendet.

Moderne elastische Abformmassen hingegen werden mit Hilfe eines stabilen Abformlöffels in den Mund eingebracht und zusammen mit dem Abformlöffel nach dem Abbindevorgang aus dem Mund entfernt. Die Abformung wird zusammen mit dem Löffel zur Modellherstellung weitergeleitet. Es wird die Abformung (Negativform) mit Hartgips-Modellmasse ausgegossen, wodurch eine Positivform - das Modell - entsteht, das dem Originalkiefer entspricht. Beim Auslösen des Modells aus der Abformung auf dem Löffel kommt es in der Praxis zu Brüchen der sehr harten und spröden Modellmassen.

Die Erfindung zielt darauf ab, einen Löffel anzugeben, der es gestattet, die Abformung zu erleichtern und Fehler bei der vorerwähnten Trennung des Modells von der Abformmasse zu vermeiden. Ein Abformlöffel gemäß der Erfindung ist dadurch gekennzeichnet, daß der Basisteil im Bodenstück eine bogenförmige, der Zunge im Mund angepaßte Ausnehmung aufweist und daß zwei Einschübe vorgesehen sind, von denen der eine für die Unterkieferabformung einen hochgezogenen Steg aufweist, der im eingeschobenen Zustand parallel zum Steg des Basisteils verläuft und eine Ausnehmung entsprechend der Ausnehmung im Basisteil begrenzt, und von denen der andere für die Oberkieferabformung ein von einem Steg begrenztes Gaumenstück umfaßt, das im eingeschobenen Zustand die Ausnehmung im Basisteil gewölbeartig überdeckt, und daß der Fortsatz jedes Einschubes formschlüssig in die Ausnehmung des Stiels des Basisteils einschiebbar und in verschiedenen axialen Relativpositionen fixierbar ist.

Es ist zweckmäßig, wenn an den Schmalseiten des Fortsatzes sowie der Ausnehmung Profilrippen bzw. Nuten vorgesehen sind. Damit ist es möglich, eine optimale und schonende Anpassung an den Oberkiefer und Unterkiefer zu erreichen. Ferner kann durch die spezielle trennbare Konstruktion der Löffel schonend zuerst von der Abformmasse getrennt werden, worauf sodann die elastische Abformmasse von dem Modell gelöst wird. Die Teile des Löffels sind präzise ineinander geführt und arretiert. Der Basisteil gibt etwa die Kiefergröße vor und bildet gleichzeitig die Vestibulumsbegrenzung. Die beiden Einschübe sind wahlweise für Oberkiefer oder den Unterkiefer die innere bzw. hintere Begrenzung. Sie sind den anatomischen Verhältnissen insbesondere im Hinblick auf die Zunge angepaßt. Der aus dem Basisteil und einem der Einschübe gebildete Löffel ist in seinen Sagittaldimensionen variabel elongierbar, also axial in Längsrichtung des Fortsatzes einstellbar. Wenn die Fortsätze der Einschübe den die Ausnehmung des Basisteils tragenden Stiel überragen, dann kann durch Druck auf den vorstehenden Fortsatz der Basisteil leicht vom Einschub getrennt werden. Es ist ferner zweckmäßig, wenn mit den Einschüben stirnseitig Wandstücke verbunden sind, die bei eingeschobenen Einschüben an die freien Enden des Stegs des Basisteils anschließen bzw. diesen überlappen. Damit ist auch bei einer Längenanpassung zwischen Basisteil und Einschub eine durchgehende seitliche Begrenzung für die Abformmasse gewährleistet. Schließlich ist es vorteilhaft, wenn der Steg des Baisisteils und gegebenenfalls auch die Stege der Einschübe an den U-förmigen Randlinien jeweils einen gegen die Zahnreihe vorspringenden Kragenleiste zum Festhalten der Abformmasse aufweisen. Dadurch haftet die Abformmasse während der Manipulation am Patienten, während des Abformvorganges sicher am Löffel, kann aber dennoch leicht vom Löffel getrennt werden, wenn die beiden Teile, nämlich Basisteil und Einschubteil auseinandergeschoben werden.

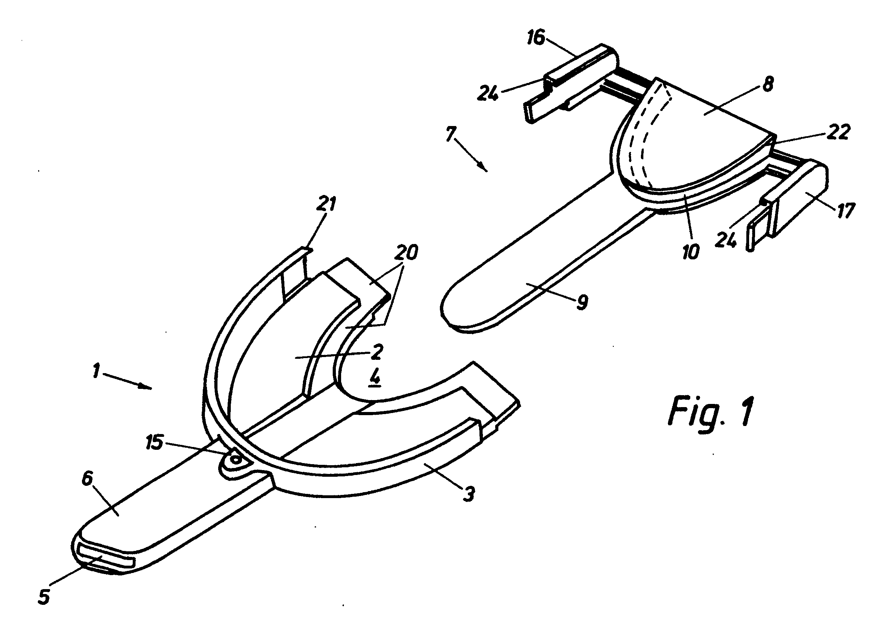

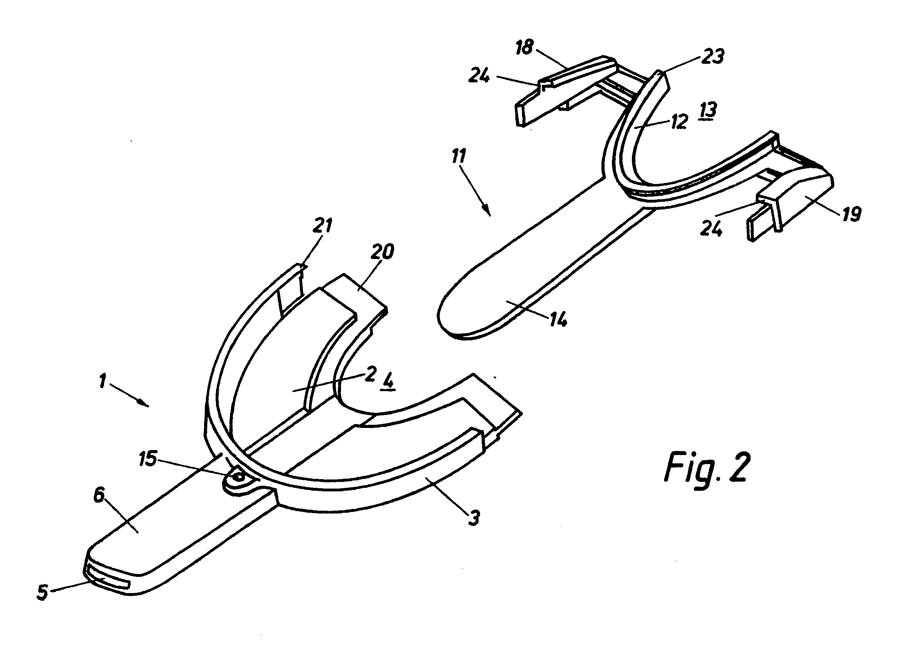

Ein Ausführungsbeispiel des erfindungsgemäßen Abformlöffels ist in den Zeichnungen dargestellt. Fig. 1 zeigt in schaubildlicher Ansicht einen Basisteil und einen Einschub für die Oberkieferabformung und Fig. 2 den Basisteil mit einem Einschub für die Unterkieferabformung, jeweils in der Einschubposition einander gegenüberstehend.

Der Basisteil 1 ist schaufelförmig ausgebildet und weist ein Bodenstück 2 mit einen U-förmigem äußeren Rand und mit einem hochgezogenen Steg 3 sowie eine U-förmige innere Ausnehmung 4 auf. Im hochgezogenen Steg 3 ist eine Ausnehmung 5 vorgesehen, die sich auch durch einen an den Steg anschließenden Stiel 6 fortsetzt.

Der Einschub 7 ist U-förmig ausgebildet und weist ein Gaumenstück 8 auf, das etwa der Gaumenwölbung nachgeformt, jedoch relativ flach gestaltet ist. An das Gaumenstück 8 schließt ein linealähnlicher Fortsatz 9 an, dessen Querschnitt dem Querschnitt der Ausnehmung 5 entspricht. Die Ausnehmung 5 bildet die Führung für den Fortsatz 9. Das Gaumenstück 8 ist seitlich durch einen U-förmig verlaufenden Steg 10 begrenzt, der bei zusammengestrecktem Basisteil und Einschub mit dem U-förmigen Steg 3 und dem Bodenstück 2 eine dem Zahnbogen etwa entsprechende, in der Breite verstellbare Mulde für die Abformmasse bildet.

Fig. 2 zeigt den Basisteil 1 nochmals, dem ein Einschub 11 gegenübersteht. Dieser Einschub umfaßt einen U-förmig verlaufenden Steg 12, der eine Ausnehmung 13 begrenzt und an dem ein Fortsatz 14 anschließt. Letzterer wird so wie der Fortsatz 9 des Einschubes 7 in die Ausnehmung 5 des Stiels 6 eingeschoben und damit ein Löffel für die Unterkieferabformung gebildet. Auch in diesem Fall ergibt sich zwischen den Stegen 3 und 12 eine dem Zahnbogen etwa entsprechende, einstellbare Mulde für die Abformmasse.

Zur Fixierung der Einstellung dient eine Feststellschraube 15. Mit den Einschüben 7 und 11 sind jeweils stirnseitig Wandstücke 16, 17 bzw. 18, 19 verbunden, die bei zusammengestecktem Löffel an den Steg 3 anschließen und diesen verlängern. Diese vorgenannten Wandstücke überlappen den Steg 3 derart, daß bei einer relativen Verstellung des Abstandes zwischen Basisteil 1 und Einschub 7 oder 11 eine durchgehende seitliche bzw. äußere Begrenzung der Mulde für die Abformmasse erhalten bleibt. Ähnliche Überlappungszonen 20 sind auch am Bodenstück 2 vorgesehen.

Schließlich tragen die Stege 3, 10 und 12 sowie auch allenfalls die Wandstücke 16, 17 und 18, 19 an ihren freien Rändern gegen die Mulde vorspringende Kragenleisten 21, 22,23 sowie 24, die die Abformmasse zangenartig festhalten. Zur Trennung der Abformmasse vom Löffel wird auf den Stiel 6 überragenden Teil des Fortsatzes 9 oder 14 geklopft, worauf sich der Löffel öffnet und die Abformmasse ohne Beschädigung freigibt.

### Patentansprüche

1. Abformlöffel zur Ober- und Unterkieferabformung, mit schaufelförmigem, randseitig von einem hochgezogenen Steg begrenztem etwa U-förmigem Basisteil und Einschub, wobei ein Fortsatz des Einschubes zur gegenseitigen Fixierung in eine Ausnehmung eines Stiels des Basisteils eingreift, dadurch gekennzeichnet, daß der Basisteil (1) in seinem Bodenstück (2) ein bogenförmige, der Zunge im Mund angepaßte Ausnehmung (4) aufweist und daß zwei Einschübe (7, 11) vorgesehen sind, von denen der eine für die Unterkieferabformung einen hochgezogenen Steg (12) aufweist, der im eingeschobenen Zustand parallel zum Steg (3) des Basisteils (1) verläuft und eine Ausnehmung (13) entsprechend der Ausnehmung (4) im Basisteil (1) begrenzt,und von denen der andere (7) für die Oberkieferabformung ein von einem Steg (10) begrenztes Gaumenstück (8) umfaßt, das im eingeschobenen Zustand die Ausnehmung (4) im Basisteil (1) gewölbeartig überdeckt,und daß der Fortsatz (9, 14) jedes Einschubes (7, 11) formschlüssig in die Ausnehmung (5) des Stiels (6) des Basisteils (1) einschiebbar und in verschiedenen axialen Relativpositionen fixierbar ist.

2. Abformlöffel nach Anspruch 1, dadurch gekennzeichnet, daß an den Schmalseiten des Fortsatzes (9, 14) sowie der Ausnehmung (5) Profilrippen bzw. Nuten vorgesehen sind.

3. Abformlöffel nach Anspruch 1, dadurch gekennzeichnet, daß die Fortsätze (9, 14) der Einschübe (7, 11) den die Ausnehmung (4) des Basisteils (1) tragenden Stiel (6) überragen.

4. Abformlöffel nach den Ansprüchen 1 und 2, dadurch gekennzeichnet, daß mit den Einschüben (7, 11) stirnseitig Wandstücke (16, 17; 18, 19) verbunden sind, die bei eingeschobenen Einschüben (7, 11) an die freien Kanten des Steges (3) des Basisteils (1) anschließen bzw. diesen überlappen.

5. Abformlöffel nach einem der Ansprüche 1 bis 4, dadurch gekennzeichnet, daß der Steg (3) des Basisteils (1) und gegebenenfalls auch die Stege (10, 12) der Einschübe /7, 11) an den U-förmigen Randlinien jeweils eine gegen die Zahnreihe vorspringende Kragenleiste (21, 22,23, 24) zum Festhalten der Abformmasse aufweisen.

### Claims

1. Impression tray for taking upper and lower jaw impressions comprising a substantially U-shaped, scoop-like main part, said U-shaped main part being bordered by a raised web, and a slide-in unit, a protuberance of said slide-in unit engaging with a recess in the handle of the main part so as to interlock the two devices, characterized in that the main part (1) has an arcuate recess (4) in its bottom part (2) matching the tongue in the human mouth; and in that two slide-in units (7, 11) are provided, one of which showing a raised web (12) for taking lower jaw impressions, said web (12) being parallel to the web (3) of the main part (1) when inserted, and delimiting a recess (13) corresponding to the recess (4) in the main part (1), the other one (7) comprising a palate part (8), bordered by a web (10), for taking upper jaw impressions, said palate part (8) vaulting the recess (4) in the main part (1) when inserted, and in that the protuberances (9, 14) of each slide-in unit (7, 11) may be inserted so as to interlock with the recess (5) in the handle (6) of the main part (1) and may be fixed in various positions relative to the axis.

2. Impression tray according to Claim 1, characterized in that sectional ribs or grooves, respectively, are provided along the narrow edges of the protuberances (9, 14) as well as the recess (5).

3. Impression tray according to Claim 1, characterized in that the protuberances (9, 14) of the slide-in units (7, 11) project from the handle (6) supporting the recess (4) of the main part (1).

4. Impression tray according to Claims 1 and 2, characterized in that lateral parts (16, 17; 18, 19) are attached to the slide-in units (7, 11) at their face ends, connecting to the free edges of the web (3) of the main part (1) or overlapping it with the slide-in units (7, 11) in position.

5. Impression tray according to Claims 1 to 4, characterized in that the web (3) of the main part (1) and, if required, also the webs (10, 12) of the slide-in units (7, 11) are provided with a ledge (21, 22, 23, 24) along their U-shaped edges projecting towards the row of teeth so as to hold the impression compound.

**Revendications**

1. Porte-empreinte pour le moulage de la mâchoire supérieure et inférieure, comprenant une pièce basale en forme de pelle et sensiblement en U, limitée sur le bord par une traverse remontée, et une pièce embrochable, un prolongement de ladite pièce embrochable s'insérant pour la fixation mutuelle dans un creux d'un manche de la pièce basale, caractérisé par le fait que la pièce basale (1) présente dans son embase (2) une échancrure (4) adaptée à la langue dans la bouche, et que sont prévues deux pièces embrochables (7, 11), dont une présente une traverse remontée (12) pour le moulage de la mâchoire inférieure, se trouvant à l'état embroché en position parallèle à la traverse (3) de la pièce basale (1) et délimitant une échancrure (13) correspondant à l'échancrure (4) de la pièce basale (1), et dont l'autre (7) comprend pour le moulage de la mâchoire supérieure une pièce palatale (8) délimitée par une traverse (10), recouvrant en forme de voûte l'échancrure (4) de la pièce basale (1) à l'état embroché, et que le prolongement (9, 14) de chaque pièce embrochable (7, 11) est insérable sans glissement dans le creux (5) du manche (6) de la pièce basale (1) et fixable en différentes positions relatives axiales.

2. Porte-empreinte selon la revendication 1, caractérisé par le fait que des nervures resp. des gorges sont prévues sur le chant du prolongement (9, 14) ainsi que du creux (5).

3. Porte-empreinte selon la revendication 1, caractérisé par le fait que les prolongements (9, 14) des pièces embrochables (7, 11) dépassent le manche (6) portant le creux (4) de la pièce basale (1).

4. Porte-empreinte selon les revendications 1 et 2, caractérisé par le fait que des parois (16, 17; 18, 19) sont reliées sur la face frontale aux pièces embrochables (7, 11), qui butent aux bords libres de la traverse (3) de la pièce basale (1) resp. la chevauchent, lorsque les pièces embrochables (7, 11) sont insérées.

5. Porte-empreinte selon une des revendications 1 à 4, caractérisé par le fait que la traverse (3) de la pièce basale (1) et le cas échéant aussi les traverses (10, 12) des pièces embrochables (7, 11) présentent chacune sur les bordures en U un rebord à collet (21, 22, 23, 24) saillant vers la denture, ayant le but de retenir la matière de moulage.

Fig. 1

EP 0 272 249 B1

Fig. 2

EP 0 272 249 B1